# EUROPEAN PATENT APPLICATION

(11) **EP 3 792 030 A1**
(43) Date of publication of application: **17.03.2021**
(21) Application number: 18924774.5
(22) Date of filing: 29.06.2018
(51) Int. Cl.: B29C 33/42, B29C 45/37

(54) **RESIN MOLDED ARTICLE AND METHOD FOR PRODUCING RESIN MOLDED ARTICLE**

(71) Applicant: Showa Denko Materials Co., Ltd., Tokyo 100-6606 (JP)
(72) Inventor: NAKANO, Shingo, Tagawa-shi, Fukuoka 825-0005 (JP); FUNATSU, Takeshi, Tagawa-shi, Fukuoka 825-0005 (JP); YAMADA, Kouji, Tagawa-shi, Fukuoka 825-0005 (JP); MITSUISHI, Naoko, Tagawa-shi, Fukuoka 825-0005 (JP); HIRAI, Yoji, Tagawa-shi, Fukuoka 825-0005 (JP)
(74) Representative: Hoffmann Eitle
(86) International application number: PCT/JP2018/024936
(87) International publication number: WO 2020/003535

(57) **Abstract**

A resin molded article, comprising a main body and a rib that is formed integrally with the main body, the rib comprising a rib A that is disposed in a direction along a direction of flow of a resin of the main body; and a rib B that is disposed upstream, in the direction of flow, of the rib A and in a direction intersecting the direction of flow.

## Description

### [Technical Field]

The invention relates to a resin molded article and a method for producing a resin molded article.

### [Background Art]

In view of the recent trend toward reduction in the weight of automobiles, interior and exterior members thereof made of metal have increasingly come to be replaced by resin molded articles. These resin molded articles are provided with a projection, which is referred to as a rib, at a position that cannot be seen from the outside, for the purposes of attachment of the articles to a car body or a member thereof, securing the strength of the articles, and the like.

As a resin molded article having a rib, an article in which a rib is integrated with a main body, produced by injection molding, is known (see, for example, Japanese Patent Application Laid-Open No. 2012-188010). This kind of resin molded article is produced by injecting resin into a mold provided with a groove having a shape corresponding to a rib at a portion at which the rib is to be formed.

### [Summary of the Invention]

### [Problem to be Solved by the Invention]

Recently, as resin molded articles have become thinner with the aim of weight reduction, there have been growing concerns about the appearance of the articles having a rib at a rear side thereof; namely, because a portion of the outer surface of the article corresponding to the rib looks different from a region surrounding the same. The reason for this is not exactly clear, but may be thought to be as follows.

A resin molded article having a rib integrated with a main body is generally produced by injecting resin into a mold provided with a groove having a shape corresponding to a rib at an inner surface thereof.

The resin is supplied from an injection gate of the mold and flows inside the mold along a predetermined direction. When a groove having a shape corresponding to a rib is provided at an inner surface of the mold, the resin flowing over the groove exhibits the behavior of filling the space inside the groove. As a result, the flow rate of the resin that flows over the groove diverges from the flow rate of the resin that flows over a region around the groove. This difference in flow rate is thought to be a cause of a flow mark formed on a surface of a resin molded article, thereby affecting the visual appearance of the same.

As a result of their investigation, the present inventors have found that the degree to which a flow mark formed on the surface of a resin molded article will appear is related to an angle between the direction of a rib integrally formed with the main body of the resin molded article and the direction of flow of the resin during the production of the resin molded article.

Specifically, when the direction of the rib accords with the direction of flow of the resin (i.e., the angle between the direction of the rib and the direction of flow of the resin is small), the degree of appearance of a flow mark formed on a surface of a resin molded article is greater as compared with a case in which the direction of the rib crosses the direction of flowage of the resin (i.e., the angle between the direction of the rib and the direction of flow of the resin is great), thereby affecting the visual appearance of a resin molded article more significantly.

As such, from the viewpoint of maintaining a favorable visual appearance of a resin molded article, it may be effective to dispose all of the ribs in a direction intersecting the direction of flow of the resin. However, if all of the ribs are disposed in a direction intersecting the direction of flow of the resin, it may not be possible to ensure sufficient strength of the ribs or of the resin molded article as a whole. Accordingly, it is desirable to dispose at least some of the ribs in a direction along the direction of flow of the resin in order to secure sufficient strength.

In view of the foregoing, the invention aims to provide a resin molded article that can maintain a favorable visual appearance while securing sufficient strength, and a method of producing the resin molded article.

### [Means for Solving the Problem]

The means for solving the problem includes the following embodiments.
<1> A resin molded article, comprising a main body and a rib that is formed integrally with the main body,
   the rib comprising a rib A that is disposed in a direction along a direction of flow of a resin of the main body; and a rib B that is disposed upstream, in the direction of flow, of the rib A and in a direction intersecting the direction of flow.
<2> The resin molded article according to <1>, wherein the rib A is in contact with the rib B, or the rib A is disposed apart from the rib B at a distance of not more than 30 mm.
<3> The resin molded article according to <1> or <2>, wherein the rib A has a width of from 0.5 mm to 2 mm.
<4> The resin molded article according to any one of <1> to <3>, having at least a portion formed of a foamed resin.
<5> The resin molded article according to any one of <1> to <4>, which is an interior or exterior member of an automobile.
<6> A method of producing a resin molded article, the method comprising a process of supplying a resin to a mold having a groove on an inner surface of the mold,
   the groove comprising a groove A that is disposed in a direction along a direction of flow of the resin supplied to the mold; and a groove B that is disposed upstream, in the direction of flow, of the groove A and in a direction intersecting the direction of flow.
<7> The method for producing a resin molded article according to <6>, wherein the groove A is in contact with the groove B, or the groove A is disposed apart from the groove B at a distance of not more than 30 mm.
<8> The method for producing a resin molded article according to <6> or <7>, wherein the rib A has a width of from 0.5 mm to 2 mm.
<9> The method for producing a resin molded article according to any one of <6> to <8>, the method being performed by injection molding.
<10> The method for producing a resin molded article according to any one of <6> to <9>, wherein the resin molded article configures an interior or exterior member of an automobile.

According to the invention, it is possible to provide a resin molded article that can maintain a favorable visual appearance while securing sufficient strength, and a method of producing the resin molded article.

### [Brief Explanation of the Drawings]

Fig. 1 is a schematic overall view of an example of the resin molded product according to the disclosure.
Fig. 2A is a plan view of a clip seat in the resin molded product shown in Fig. 1.
Fig. 2B is a sectional view of the clip seat at the a-a line in Fig. 2A.
Fig. 2C is a sectional view of the clip seat at the b-b line in Fig. 2A.
Fig. 2D is a perspective view of the clip seat shown in Fig. 2A.
Fig. 3A is a plan view of a conventional clip seat.
Fig. 3B is a sectional view of the clip seat at the a-a line in Fig. 3A.
Fig. 3C is a sectional view of the clip seat at the b-b line in Fig. 3A.

### [Embodiments for Implementing the Invention]

Embodiments according to the disclosure will now be described in detail. However, the invention is in no way limited to the following embodiments. In the following embodiments, constituent elements (including element steps and the like) of the embodiments are not essential, unless otherwise specified. Likewise, numerical values and ranges thereof are not intended to restrict the invention.

In the disclosure, the definition of the term "step" includes not only an independent step which is distinguishable from another step, but also a step which is not clearly distinguishable from another step, as long as the purpose of the step is achieved.

In the disclosure, any numerical range described using the expression "to" represents a range in which numerical values described before and after the "to" are included in the range as a minimum value and a maximum value, respectively.

In a numerical range described in stages, in the disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

### <Resin molded article>

The resin molded article according to the disclosure is a resin molded article, comprising a main body and a rib that is formed integrally with the main body, the rib comprising a rib A that is disposed in a direction along a direction of flow of a resin of the main body; and a rib B that is disposed upstream, in the direction of flow, of the rib A and in a direction intersecting the direction of flow.

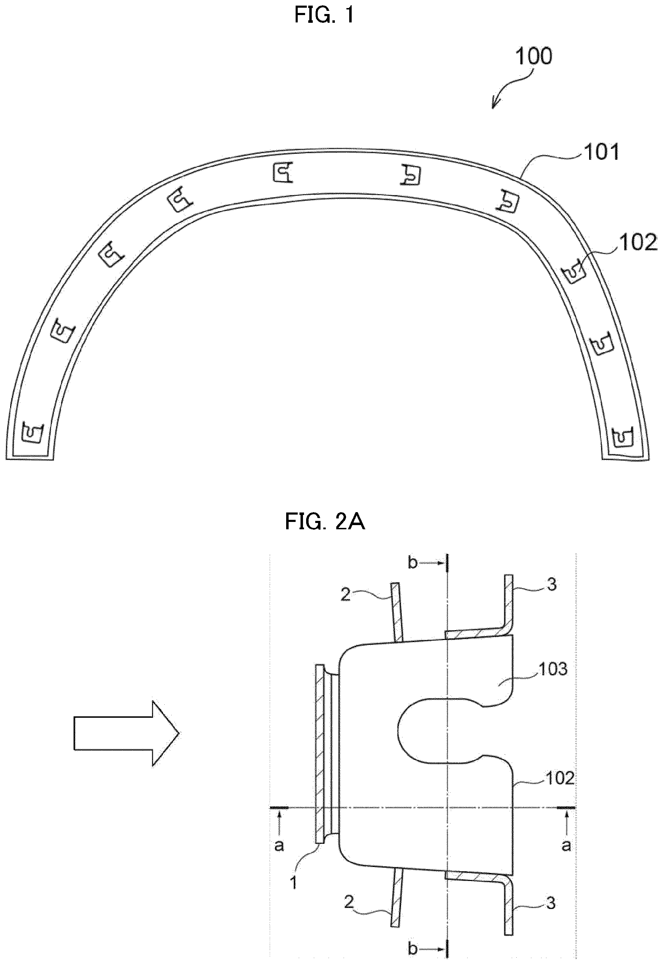

Fig. 1 is a schematic overall view of an example of the resin molded product according to the disclosure, showing a side at which a rib is provided. In Fig. 1, the resin molded article 100 includes a main body 101, a rib that is formed integrally with the main body, and a clip seat 102 that is a member to attach the resin molded product to a car body.

Although the resin molded article 100 shown in Fig. 1 has a shape of an arch molding, an exterior member of an automobile, the resin molded article in the disclosure is not limited thereto. Further, although the rib shown in Fig. 1 forms a clip seat, the rib in the disclosure is not limited thereto.

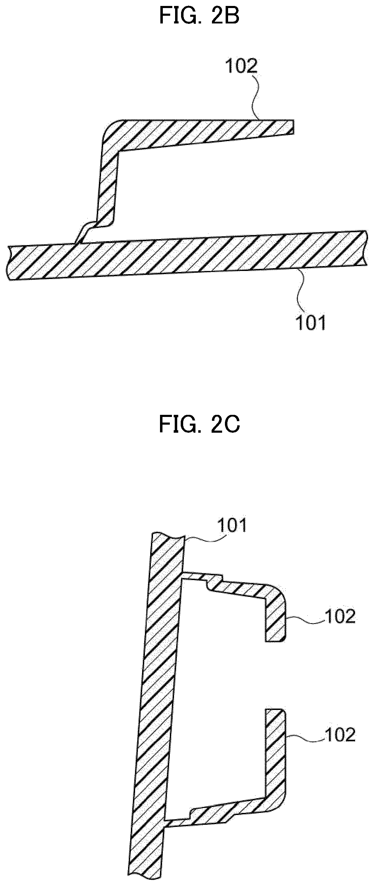

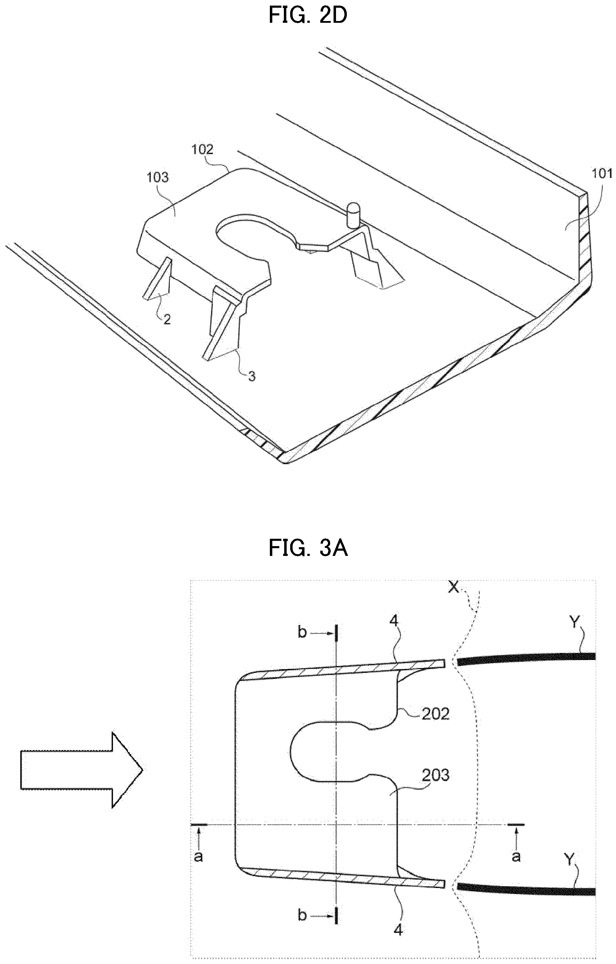

Fig. 2A is a plan view of the clip seat 102 in the resin molded product 100. In Fig. 2A, the clip seat 102 has a clip seat main body 103 and ribs 1 to 3 that connect the main body 101 and the clip seat main body 103. Fig. 2B is a sectional view of the clip seat 102 and the main body 101 at the a-a line in Fig. 2A, Fig. 2C is a sectional view of the clip seat 102 and the main body 101 at the b-b line in Fig. 2A, and Fig. 2D is a perspective view of the clip seat 102 shown in Fig. 2A.

As shown in Fig. 2A, in the clip seat 102, a portion of the rib 3 (corresponding to rib A) is disposed along a direction of flow of a resin (indicated by the block arrow), and a rib 2 (corresponding to rib B) is disposed upstream, in the direction of flow, of the rib 3, and in a direction intersecting the direction of flow of the resin.

The resin molded article shown in Fig. 2A maintains a favorable visual appearance, because a flow mark, which appears at a position corresponding to the clip seat 102 on the surface opposite to the surface on which the clip seat 102 is provided, is indistinctive. The reason for this is not exactly clear, but may be thought to be as follows.

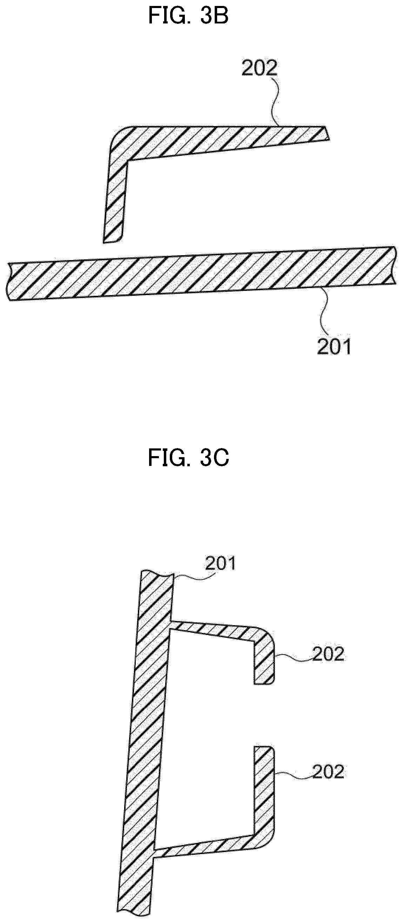

Fig. 3A is a plan view of a conventional clip seat 202. In the clip seat 202, the side of a clip seat main body 203 functions as a rib 4 and connects a main body 201 and the clip seat main body 203. Fig. 3B is a sectional view of the clip seat 202 and the main body 201 at the a-a line in Fig. 3A, and Fig. 3C is a sectional view of the clip seat 202 and the main body 201 at the b-b line in Fig. 3A.

As shown in Fig. 3A, in the conventional clip seat 202, a rib 4 (corresponding to rib A) is disposed along a direction of flow of a resin (indicated by the block arrow), but no rib is disposed upstream, in the direction of flow, of the rib 4, and in a direction intersecting the direction of flow. In that case, the edge of the flowing resin (indicated by the dotted line X) has a recess at a position corresponding to the rib 4, indicating that the flow of the resin at the position corresponding to the rib 4 is slower than the flow of the resin at the surrounding portion. As a result, a flow mark due to a difference in the rate of flow of the resin (indicated by the line Y) is formed downstream of the rib 4.

On the other hand, in the resin molded article having the clip seat 102 shown in Fig. 2A, the rate of flow of the resin is kept constant without forming a recess as shown in Fig. 3A at the edge of the resin flowing inside a mold. As a result, formation of a flow mark as shown in Fig. 3A is suppressed, and a favorable visual appearance is maintained.

In the resin molded article according to the disclosure, the "direction of flow of a resin" refers to a direction in which the resin used for the preparation of the resin molded articles flows inside a mold. The direction of flow of a resin in the resin molded article may be determined by, for example, the position of a mark of a gate of the mold formed on a surface of the resin molded article. Alternatively, the direction of flow of a resin may be determined by observing a state of a surface or a section of the resin molded article.

In the disclosure, the "direction of flow of a resin" refers to a direction of flow of a resin at the time of passing over a groove corresponding to a rib, and the direction may be different from a direction of flow of the resin at the time of passing over a groove corresponding to a different rib. Therefore, the direction of flow of a resin in the resin molded article may be a single direction or a combination of plural directions.

In the resin molded articles, the "rib A that is disposed in a direction along a direction of flow of a resin" refers to a rib that is disposed in a direction at an angle of from 0° to 40° with respect to a direction of flow of a resin. The "rib B that is disposed in a direction intersecting the direction of flow" refers to a rib that is disposed in a direction at an angle of from 60° to 90° with respect to a direction of flow of a resin.

The angle between the direction at which the rib A is disposed and the direction of flow of a resin is preferably from 0° to 20°, more preferably from 0° to 10°.

The angle between the direction at which the rib B is disposed and the direction of flow of a resin is preferably from 75° to 90°, more preferably from 80° to 90°.

In the disclosure, the direction at which the rib A and the rib B (hereinafter, also referred to as a rib) is determined at the bottom of the rib (a portion at which the rib rises from the main body of the resin molded article). For example, when the bottom of the rib has a rectangular or approximately rectangular shape, a direction along the long side of the shape of the bottom is regarded as the direction at which the rib is disposed. When the shape of the bottom of the rib is not rectangular, a direction along the maximum diameter of the shape of the bottom is regarded as the direction at which the rib is disposed.

The bottom of the rib may have a shape of I, i.e., a shape being directed along a direction of flow of a resin or along a direction intersecting the direction of flow as a whole, or may have a shape other than I. Examples of the shape other than I include a combination of I-shapes being directed along different directions (such as L-shape or cross shape) and a combination of I-shape and a shape that is not I-shape (such as U-shape). When the shape of the bottom of the rib is a combination of I-shape and a shape that is not I-shape, the direction along the I-shaped portion is regarded as the direction along which the rib is disposed. In that case, the length and the width of the I-shaped portion are regarded as the length and the width of the rib, respectively.

In the resin molded article, the rib A and the rib B may be in contact with each other, or may be disposed apart from each other. From the viewpoint of suppressing the appearance of a flow mark, the rib A and the rib B are preferably in contact with each other or disposed apart from each other at a distance of not more than 30 mm; more preferably the rib A and the rib B are in contact with each other or disposed apart from each other at a distance of not more than 10 mm. In the disclosure, the distance between the rib A and the rib B refers to a distance between the rib A and the rib B that is closest to the rib A. Specifically, the distance between the rib A and the rib B refers to a length of the shortest line that connects the outline of the bottom of the rib A and the outline of the bottom of the rib B.

The number of the rib A and the rib B provided to the resin molded article is not particularly limited. The number of the rib B with respect to a single rib A may be one or more than one, and the number of the rib A with respect to a single rib B may be one or more than one.

From the viewpoint of suppressing the appearance of a flow mark, the width of the rib A is preferably as narrow as possible. For example, the width of the rib A is preferably 2 mm or less, more preferably 1.5 mm or less, further preferably 1 mm or less. From the viewpoint of securing the strength, the width of the rib A is preferably as wide as possible. For example, the width of the rib A is preferably 0.5 mm or more.

From the viewpoint of suppressing the appearance of a flow mark, the length of the rib A is preferably as short as possible. For example, the length of the rib A is preferably 100 mm or less, more preferably 70 mm or less, further preferably 50 mm or less. From the viewpoint of securing the strength, the length of the rib A is preferably as long as possible. For example, the length of the rib A is preferably 2mm or more, more preferably 5 mm or more.

From the viewpoint of suppressing the appearance of a flow mark, the height of the rib A is preferably as low as possible. For example, the height of the rib A is preferably 20 mm or less, more preferably 15 mm or less. From the viewpoint of securing the strength, the height of the rib A is preferably as high as possible. For example, the height of the rib A is preferably 1 mm or more, more preferably 2 mm or more, further preferably 5 mm or more.

In the resin molded article, the shape of the rib B is not particularly limited because the rib B is disposed along a direction intersecting a direction of flow of a resin, and a flow mark due to the rib B is less likely to appear. For example, the rib B may have a length in a range of from 5 mm to 100 mm, or may have a width in a range of from 0.5 mm to 5 mm.

In the resin molded article, the position at which the rib is disposed is not particularly limited. For example, when the rib is for the purpose of attaching the resin molded article to a car body or the like, the rib is disposed at which the resin molded article is attached to a car body or the like. When the rib is for the purpose of reinforcement, the rib is disposed at a position that needs to be reinforced.

The thickness (the minimum value of the thickness when the thickness is not uniform) of the main body of the resin molded article is not particularly limited, and may be selected depending on the purposes or the like. From the viewpoint of suppressing the appearance of a flow mark, the main body of the resin molded article is preferably as thick as possible. For example, the thickness of the main body (in particular, the thickness at a surface at which the rib is disposed) is preferably 1 mm or more, more preferably 2 mm or more. From the viewpoint of reducing the weight, the main body of the resin molded article is preferably as thin as possible. For example, the thickness of the main body is preferably 4 mm or less, more preferably 3 mm or less, further preferably 2.5 mm or less.

The size of the resin molded article is not particularly limited. From the viewpoint of thoroughly demonstrating the effect of achieving the reduction in thickness while maintaining the strength, and also maintaining a favorable visual appearance, the resin molded article may have an area of the principal surface (surface with the greatest area) of 180 cm² or more.

In the resin molded article, either all of the ribs or some of the ribs may satisfy the conditions for the rib A and the rib B. For example, at least the ribs disposed at a portion of the resin molded article at which the visual appearance is important may satisfy the conditions for the rib A and the rib B.

The resin molded article may have at least a portion formed of a foamed resin. By having at least a portion formed of a foamed resin, it is possible to reduce the weight of the resin molded article as compared with a resin molded article having the same thickness but not having a portion formed of a foamed resin.

When the resin molded article has at least a portion formed of a foamed resin, for example, the resin molded article may be in a state in which an inner portion is formed of a foamed resin, and a portion close to a surface of the resin molded article is formed from a resin that is not foamed (skin layer).

When the resin molded article has at least a portion formed of a foamed resin, the production method thereof is not particularly limited. For example, a molded article formed of a foamed resin may be produced by a method comprising charging a resin material including a foaming agent into a cavity between a movable mold and a fixed mold; moving the movable mold in a direction away from the fixed mold (core back) to expand the volume of the cavity such that the resin material is foamed; and cooling the foamed resin material (injection foam molding). In this method, a rib can be formed integrally on a surface of the main body by providing a groove to a mold at a portion corresponding to the rib. Further, a molded article having a desirable thickness can be produced by adjusting the movement distance for the movable mold.

The resin used for the production of resin molded article is not particularly limited. For example, the resin may be selected from thermoplastic resins that are generally used for injection molding. Specific example of the resin include polyethylene resin, polypropylene resin, composite polypropylene resin, polystyrene resin, polyethylene terephthalate resin, polyvinyl alcohol resin, vinyl chloride resin, ionomoner resin, polyamide resin, acrylonitrile-butadiene-styrene copolymer resin and polycarbonate resin. Among these resins, at least one selected from the group consisting of polypropylene resin, composite polypropylene resin and acrylonitrile-butadiene-styrene copolymer resin is preferred. It is possible to use a single kind of resin or two or more kinds thereof for the production of the resin molded article.

When a foaming agent is used for the production of the resin molded article, examples of the foaming agent include organic foaming agents such as azodicarbonamide and inorganic foaming agents such as sodium hydrogen carbonate (sodium bicarbonate). Although sodium hydrogen carbonate is commonly used in the current method for producing interior members for automobiles by foaming molding, an organic foaming agent is preferable in terms of improving the coating properties (such as resistance to hot water).

Examples of the organic foaming agent include azodicarbonamide (ADCA), N,N-dinitrosopentamethylenetetramine (DPT), 4,4-oxybisbenzenesulfonylhydrazide (OBSH) and hydrazodicarbonaminde (HDCA). Among these, azodicarbonamide (ADCA) is preferred.

The resin molded article according to the disclosure may be used for various purposes. In particular, the resin molded article is suitably used for the purpose in which the visual appearance is important, such as interior or exterior members for automobiles. Examples of the interior or exterior members for automobiles include an arch molding, a side molding, a rocker molding and a bumper.

### <Method of producing resin molded article>

The method of producing a resin molded article according to the disclosure is a method of producing a resin molded article, the method comprising a process of supplying a resin to a mold having a groove on an inner surface of the mold, the groove comprising a groove A that is disposed in a direction along a direction of flow of the resin supplied to the mold; and a groove B that is disposed upstream, in the direction of flow, of the groove A and in a direction intersecting the direction of flow.

The resin molded article, produced by the method as described above, has a rib that is integrally formed with the main body and has a shape corresponding to the shape of the groove provided on an inner surface of the mold. Specifically, the resin molded article has the ribs that satisfy the conditions of the rib A and the rib B in the resin molded article according to the disclosure. Accordingly, the appearance of a flow mark at a surface opposite to the surface at which the rib is disposed is suppressed, whereby the resin molded article produced by the method as described above maintains a favorable visual appearance.

With regard to the details and preferred embodiments of the resin molded article produced by the method as described above, the details and preferred embodiments of the resin molded article as described above may be referred to, rewording the "rib" as the "groove" as necessary.

The method for implementing the method as described above is not particularly limited. For example, the method may be a commonly used injection molding. The method may be a method in which at least a portion of the molded article is formed of a foamed resin, as described above.

### [Examples]

In the following, the embodiments for implementing the invention will be explained in further detail. However, the invention is not limited to the following embodiments. In the following embodiments, constituent elements (including element steps and the like) of the embodiments are not essential, unless otherwise specified. Likewise, numerical values and ranges thereof are not intended to restrict the invention.

A resin molded article was prepared by injection foaming molding, using a resin material prepared by mixing 100 parts by mass of polypropylene resin and 2 parts by mass of azodicarbonamide (ADCA) as a foaming agent. For the molding, a mold having, on an inner surface thereof, grooves of a shape corresponding to the clip seat 102 shown in Fig. 2A and the clip seat 202 as shown in Fig. 3A was used.

A resin molded article was prepared using the resin material and the mold as describe above. In the process, the resin material was supplied from a gate provided to the mold such that the resin flowed in the directions shown in Fig. 2A and Fig. 3A at the time of passing over the grooves. The molding was performed under the conditions of a molding temperature of 50°C, a cylinder temperature of 220°C, a cooling time of 15 seconds and a temperature of the resin material at the time of injection of 220°C.

The obtained resin molded article had a thickness of the main body at a surface at which the clip seat was disposed of 3 mm, a width of the rib 1 in the clip seat 102 of 0.5 mm, a width of the rib 2 at a portion disposed along the direction of flow of 0.9 mm, a width of the rib 2 at a portion intersecting the direction of flow of 0.6 mm, a width of the rib 3 of 0.9 mm, and a width of the rib 4 at the clip seat 202 of 0.8 mm.

A surface of the resin molded article, opposite to a surface at which the clip seats 201 and 202 were disposed, was visually observed. As a result, a flow mark was not observed at a portion at which the clip seat 102 was disposed, but a flow mark was not observed at a portion at which the clip seat 202 was disposed.

All publications, patent applications, and technical standards mentioned in the present specification are incorporated herein by reference to the same extent as if each individual publication, patent application, or technical standard was specifically and individually indicated to be incorporated by reference.

### [Explanation of symbols]

100: resin molded article, 101 and 201: main body, 102 and 202: clip seat, 103 and 203: clip seat main body, 1, 2, 3 and 4: rib, X: edge of resin, Y: flow mark

## Claims

1. A resin molded article, comprising a main body and a rib that is formed integrally with the main body,
the rib comprising a rib A that is disposed in a direction along a direction of flow of a resin of the main body; and a rib B that is disposed upstream, in the direction of flow, of the rib A and in a direction intersecting the direction of flow.

2. The resin molded article according to claim 1, wherein the rib A is in contact with the rib B, or the rib A is disposed apart from the rib B at a distance of not more than 30 mm.

3. The resin molded article according to claim 1 or claim 2, wherein the rib A has a width of from 0.5 mm to 2 mm.

4. The resin molded article according to any one of claim 1 to claim 3, having at least a portion formed of a foamed resin.

5. The resin molded article according to any one of claim 1 to claim 4, which is an interior or exterior member of an automobile.

6. A method of producing a resin molded article, the method comprising a process of supplying a resin to a mold having a groove on an inner surface of the mold,
the groove comprising a groove A that is disposed in a direction along a direction of flow of the resin supplied to the mold; and a groove B that is disposed upstream, in the direction of flow, of the groove A and in a direction intersecting the direction of flow.

7. The method for producing a resin molded article according to claim 6, wherein the groove A is in contact with the groove B, or the groove A is disposed apart from the groove B at a distance of not more than 30 mm.

8. The method for producing a resin molded article according to claim 6 or claim 7, wherein the rib A has a width of from 0.5 mm to 2 mm.

9. The method for producing a resin molded article according to any one of claim 6 to claim 8, the method being performed by injection molding.

10. The method for producing a resin molded article according to any one of claim 6 to claim 9, wherein the resin molded article configures an interior or exterior member of an automobile.
